# EUROPEAN PATENT APPLICATION

(11) **EP 0 689 892 A1**
(43) Date of publication of application: **03.01.1996**
(21) Application number: 95304053.2
(22) Date of filing: 13.06.1995
(51) Int. Cl.: B23H 7/04, B23H 1/02, B23H 7/06

(54) **Method and apparatus for wire cutting electrical discharge machining**

(30) Priority: 27.06.1994 JP 144729/94
(71) Applicant: FANUC LTD., Minamitsuru-gun, Yamanashi 401-05 (JP)
(72) Inventor: Arakawa, Yasuo, D-17302 Ostfildern-Ruit (DE); Ito, Masaya, Tokyo 197 (JP)
(74) Representative: Jackson, Peter Arthur

(57) **Abstract**

A wire cutting electrical discharge machining apparatus and a method of wire cutting electrical discharge machining which are free from electrolysis corrosion and which are realized by preventing an electric current from flowing in an electrical discharge machining liquid in one direction prior to commencement of electric discharge machining and after electric discharge machining is completed.

## Description

This invention relates to improvements applicable to a wire cutting electrical discharge machining apparatus and to a method of wire cutting electrical discharge machining. More specifically, this invention relates to improvements developed for preventing electrolysis corrosion from occurring during a period in which wire cutting electrical discharge machining is conducted.

A wire cutting electrical discharge machining apparatus is defined as an apparatus employable for machining a metal work by corroding the metal work employing electrical discharge which occurs between the wire electrode and the work, while the wire electrode is being moved toward the work along a desired path.

Electrical discharge machining is inevitably accompanied by electrolysis corrosion, because an electric current flows in an electrical discharge machining liquid in one direction. The problem of electrolysis corrosion which occurs in an electrical discharge machining liquid is not necessarily a serious problem, if a work is made of steel. However, when a work is made of an extremely hard metal produced by sintering a mixture of tungstencarbide and a cobalt binder or a diamond sintered product produced by sintering a mixture of a diamond powder and a conductor binder, electrolysis corrosion causes the binder to disjoin from the diamond sintered product, resultantly decreasing the hardness thereof. When a work is a titanium alloy, electrolysis corrosion causes numerous fine holes to be made in the alloy and causes the colour of the alloy to be changed. Therefore, it is required to develope a wire cutting electrical discharge machining apparatus which is free from electrolysis corrosion and a method of wire cutting electrical discharge machining which is not accompanied by occurrence of electrolysis corrosion.

To meet this requirement, a wire cutting electrical discharge machining apparatus was added a means for flowing a reverse current of which the cumulative value equals to the cumulative value of the corresponding electrical discharge machining pulse current after each electrical discharge. Since the effect to cause electrolysis corrosion caused by the electrical discharge pulse current is canceled by the reverse current of which the cumulative value equals to the cumulative value of the electrical discharge machining pulse current, the foregoing improved wire cutting electrical discharge machining apparatus is free from occurrence of electrolysis corrosion insofar as a period in which electrical discharge machining is proceeding, is concerned.

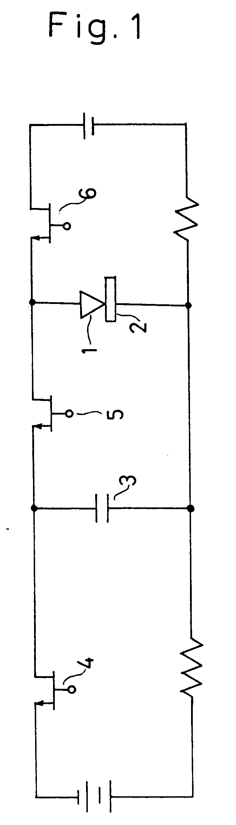

Referring to Fig. 1 which illustrates the main circuit of the foregoing improved wire cutting electrical discharge machining apparatus available in the prior art, a work 2 is placed, in an electrical discharge machining liquid, to face a wire electrode 1 which is moved toward the work 2 along a desired path. A switching means for applying charge pulse voltage 4 is employed to charge a capacitor 3, of which the charged voltage is applied between the wire electrode 1 and the work 2 by a switching means for applying electrical discharge machining pulse voltage 5. The other DC voltage is applied between the wire electrode 1 and the work 2 by a switching means for applying reverse voltage 6 in the direction reverse to the direction of the electrical discharge machining pulse voltage.

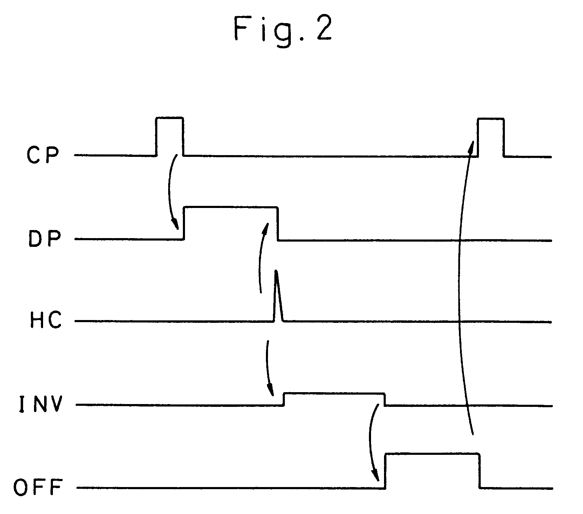

Referring to Fig. 2 which is a timing chart for one cycle of wire cutting electrical discharge machining to be conducted by employing a wire cutting electrical discharge machining apparatus of which the main circuit is illustrated in Fig. 1, the switching means for applying charge pulse voltage 4 is turned on to apply a charge pulse voltage CP to the capacitor 3. When the capacitor 3 has been charged, the switching means for applying charge pulse voltage 4 is turned off, and the switching means for applying electrical discharge machining pulse voltage 5 is turned on to apply electrical discharge machining pulse voltage DP between the wire electrode 1 and the work 2. In response to detection of an electrical discharge machining current HC flowing from the work 2 to the wire electrode 1, the switching means for applying electrical discharge machining pulse voltage 5 is turned off and the switching means for applying reverse voltage 6 is turned on to apply a reverse voltage between the wire electrode 1 and the work 2 and to cause a reverse current INV to flow from the wire electrode 1 to the work 2 or in the direction reverse to the direction of the electrical discharge machining current. When the cumulative value of the reverse current INV has reached the cumulative value of the electrical discharge machining current HC, the switching means for applying reverse voltage 6 is turned off. After a pause OFF of a predetermined length of time, the switching means for applying charge pulse voltage 4 is turned on again to apply a charge pulse voltage CP to the capacitor 3.

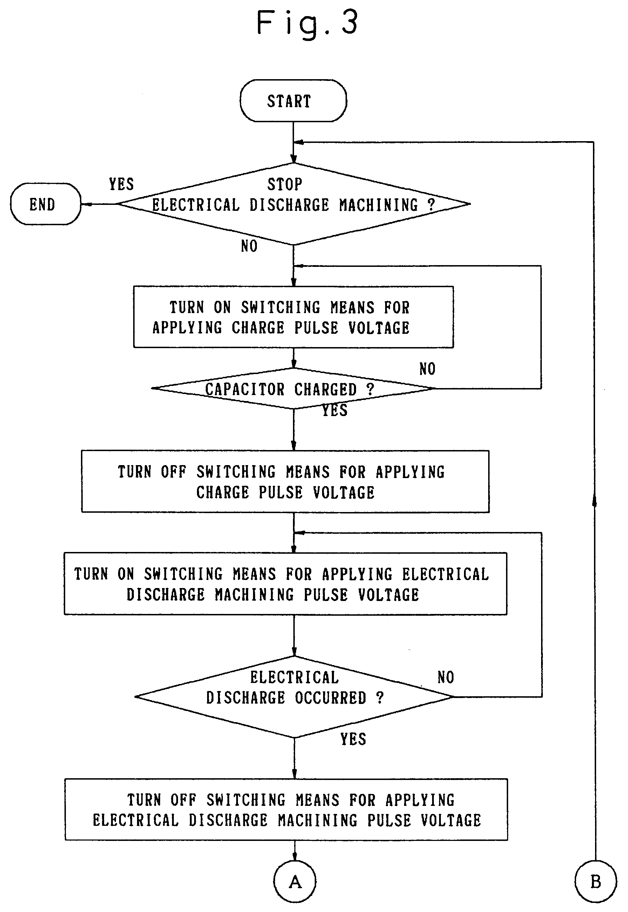

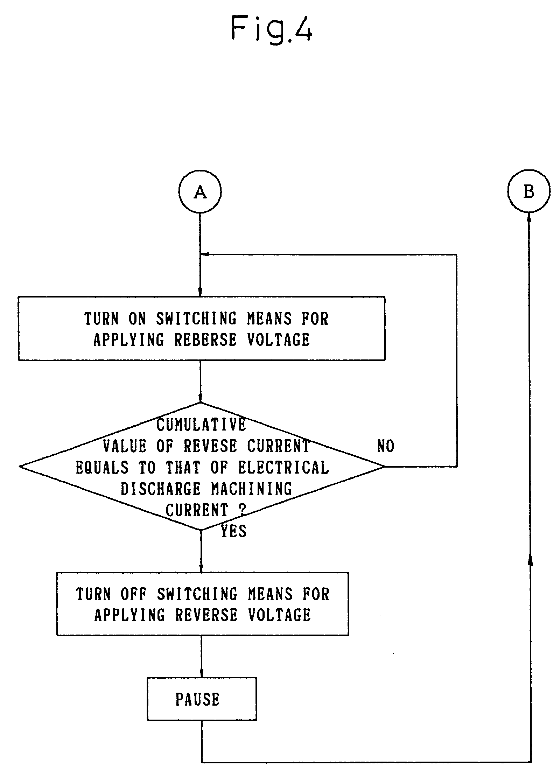

The foregoing steps can be illustrated in a flow chart shown in Figs. 3 and 4.

In the wire cutting electrical discharge machining conducted following the foregoing steps, the cumulative value of the current flown in the forward direction equals to that of the current flown in the reverse direction. Therefore, the effect of the forward current to cause electrolysis corrosion is canceled by the effect of the reverse current. As a result, electrolysis corrosion is prevented from occurring at least in a period in which electrical discharge machining is proceeding.

However, wire cutting electrical discharge machining conducted by employing the foregoing improved wire cutting electrical discharge machining apparatus of which the main circuit is illustrated in Fig. 1 and following the steps illustrated in the flow chart shown in Figs. 3 and 4 can not be free from electrolysis corrosion during a period in which a wire electrode 1 is approaching a work 2 and during a period after electrical discharge machining is completed. This is because a wire electrode 1 applied a voltage of 60-200 V and a metal work 2 are kept in an electrical discharge machining liquid, resultantly causing an electric current to flow in one direction.

The object of this invention is to provide a wire cutting electrical discharge machining apparatus which is free from electrolysis corrosion even in a period in which a wire electrode is approaching a work prior to commencement of electrical discharge machining and in a period after electrical discharge machining is completed, and a method of wire cutting electrical discharge machining which is not accompanied by electrolysis corrosion even in a period in which a wire electrode is approaching a work prior to commencement of electrical discharge machining and in a period after electrical discharge machining is completed.

To achieve the foregoing first object, a wire cutting electrical discharge machining apparatus in accordance with this invention is a wire cutting electrical discharge machining apparatus provided a means for applying a forward pulse voltage and a reverse voltage in turn between a wire electrode and a work, while the wire electrode is being moved toward the work along a desired path, the apparatus being further provided a means for moving the wire electrode toward the work while a feeble voltage is applied between the wire electrode and the work prior to commencement of electrical discharge machining, a means for detecting contact of the wire electrode with the work and for moving the wire electrode backward to remove the wire electrode from the work, in response to the contact of the wire electrode with the work, a means for detecting disunion of the wire electrode from the work and for commencing electrical discharge machining, in response to the disunion of the wire electrode from the work, and a means for detecting interruption of electrical discharge machining current for a predetermined period and for terminating electrical discharge machining, in response to the termination of flowing the electrical discharge machining current.

To achieve the foregoing second object, a method of wire cutting electrical discharge machining in accordance with this invention is a method of wire cutting electrical discharge machining including a step for applying a forward pulse voltage and a reverse voltage in turn between a wire electrode and a work, while moving the wire electrode toward the work, along a desired path, the method further including a step for moving the wire electrode toward the work, while applying a feeble voltage between the wire electrode and the work, prior to commencement of electrical discharge machining, a step for detecting contact of the wire electrode with the work by discovering a decrease in voltage between the wire electrode and the work and for moving the wire electrode backward to remove the wire electrode from the work, in response to the contact of the wire electrode with the work, a step for detecting disunion of the wire electrode from the work by discovering an increase in voltage between the wire electrode and the work and for commencing electrical discharge machining, in response to the disunion of the wire electrode from the work, and a step for detecting interruption of electrical discharge current for a predetermined period and for terminating electrical discharge machining, in response to termination of the flowing of the electrical discharge current for a predetermined period.

This invention, together with its various features and advantages, can be readily understood from the following more detailed description presented in conjunction with the following drawings, in which:
Fig. 1 is a circuit diagram of the main circuit of a wire cutting electrical discharge machining apparatus available in the prior art,
Fig. 2 is a timing chart for one cycle of wire cutting electrical discharge machining to be conducted by employing a wire cutting electrical discharge machining apparatus available in the prior art of which the main circuit is illustrated in Fig. 1,
Fig. 3 is the former half of a flow chart of electrical discharge machining to be conducted by employing a wire cutting electrical discharge machining apparatus available in the prior art of which the main circuit is illustrated in Fig. 1,
Fig. 4 is the latter half of a flow chart of electrical discharge machining to be conducted by employing a wire cutting electrical discharge machining apparatus available in the prior art of which the main circuit is illustrated in Fig. 1,

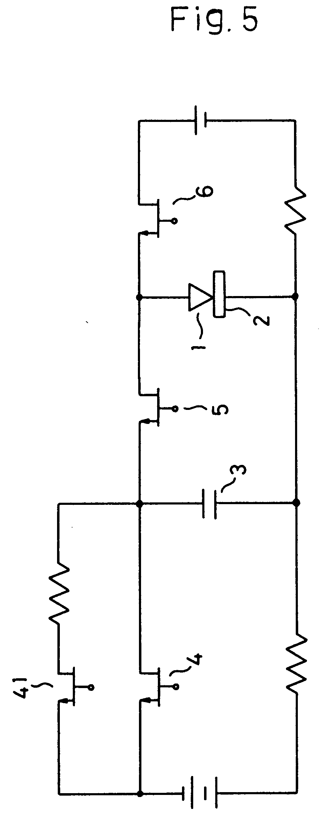

Fig. 5 is a circuit diagram of the main circuit of a wire cutting electrical discharge machining apparatus in accordance with this invention, and

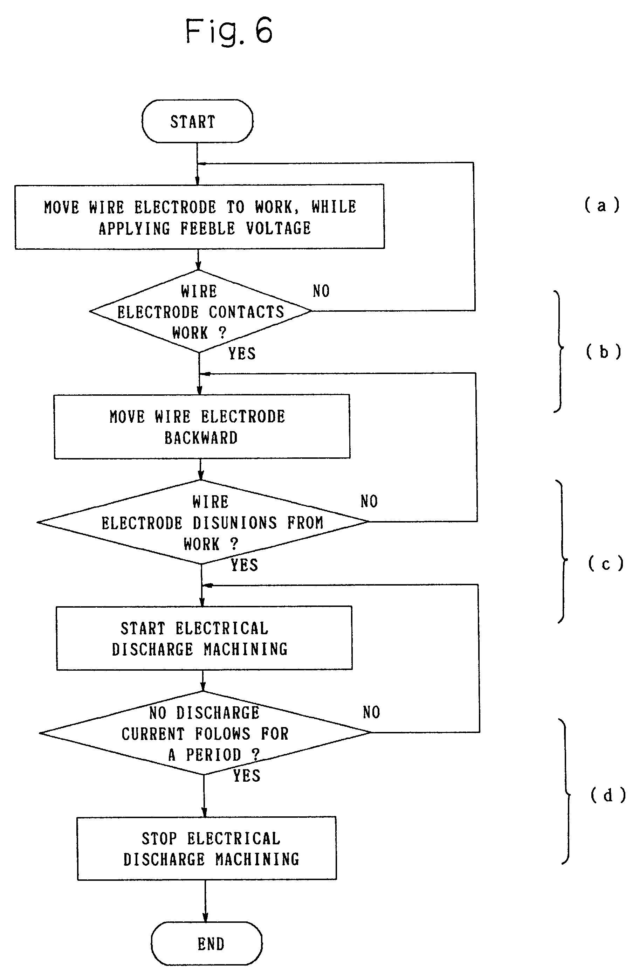

Fig. 6 is a flow chart of electrical discharge machining to be conducted by employing a wire cutting electrical discharge machining apparatus in accordance with this invention of which the main circuit is illustrated in Fig. 5.

Referring to Fig. 5 which illustrates the main circuit of a wire cutting electrical discharge machining apparatus in accordance with this invention, a work 2 is placed, in an electrical discharge machining liquid, to face a wire electrode 1 which is moved toward the work 2 along a desired path. A switching means for applying charge pulse voltage 4 is employed to charge a capacitor 3, of which the charged voltage is applied between the wire electrode 1 and the work 2 by a switching means for applying electrical discharge machining pulse voltage 5. The combination of the switching means for applying electrical discharge machining pulse voltage 5 and a switching means for applying feeble voltage 41 is employed to apply voltage between the wire electrode and the work 2. The other DC voltage is applied between the wire electrode and the work 2 by a switching means for applying a reverse voltage 6 in a direction reverse to the direction in which the electrical discharge machining pulse voltage is applied.

Referring to Fig. 6 which is a flow chart of wire cutting electrical discharge machining to be conducted by employing a wire cutting electrical discharge machining apparatus in accordance with this invention of which the main circuit is illustrated in Fig. 5, the steps of the wire cutting electrical discharge machining will be described below.
(a) The switching means for applying feeble voltage 41 and the switching means for applying electric discharge machining pulse voltage 5 are turned on to apply a feeble voltage e.g. a voltage of several V between the wire electrode 1 and the work 2, while the wire electrode 1 is being moved toward the work 2. Since the specific resistance varies 10,000 ohm-cm through 200,000 ohm-cm, a voltage of several V is not large enough to cause electrolysis corrosion to occur.
(b) When the wire electrode 1 has contacted the work 2, the foregoing feeble voltage is short-circuited and a large short-circuit current flows from the work 2 to the wire electrode 1. Therefore, contact of the wire electrode 1 with the work 2 can be readily detected by observing the increase in the intensity of the current flowing from the work 2 to the wire electrode 1. In response to this increase in the current, the wire electrode 1 is moved backward from the work 2.
(c) When the contact of the wire electrode 1 with the work 2 has been releaved, the feeble voltage recovers between the wire electrode 1 and the work 2. Therefore, disunion of the wire electrode 1 from the work 2 can be readily detected by observing the recovery of the feeble voltage between the wire electrode 1 and the work 2. In response to this recovery of the voltage between the wire electrode 1 and the work 2, the switching means for applying feeble voltage 41 is turned off and the steps of the electrical discharge machining illustrated in the flow chart shown in Figs. 3 and 4 are commenced.
(d) When electrical discharge machining is completed, the electrical discharge machining current ceases flowing. Therefore, completion of electrical discharge machining can be readily detected by observing interruption of the electrical discharge machining current for a predetermined period. In response to this termination of the electrical discharge machining current for a predetermined period, the switching means for applying charge pulse voltage 4 is turned off to terminate electrical discharge machining.

In the electrical discharge machining described above, a reverse current of which the cumulative value equals to the cumulative value of the corresponding electrical discharge machining current flows after each electrical discharge machining current, resultantly canceling the effect of the electrical discharge machining current for causing electrolysis corrosion to occur during the period in which wire cutting electrical discharge machining is proceeding, and no voltage is applied between a wire electrode and a work during a period in which a wire electrode is approaching a work and during a period after electrical discharge machining is completed, resultantly preventing any electric current which is strong enough to cause electrolysis corrosion to occur from flowing during a period in which a wire electrode is approaching a work and during a period after electrical discharge machining is completed. As a result, electrolysis corrosion is prevented from occurring for the entire period in which a wire cutting electrical discharge machining apparatus in accordance with this invention is employed.

The foregoing description has clarified that a wire cutting electrical dicharge machining apparatus which is free from electrolysis corrosion even in a period in which a wire electrode is approaching a work prior to commencement of electrical discharge machining and in a period after electrical discharge machining is completed, and a method of wire cutting electrical discharge machining which is not accompanied by electrolysis corrosion even in a period in which a wire electrode is approaching a work prior to commencement of electrical discharge machining and in a period after electrical discharge machining is completed, were successfully provided.

## Claims

1. A wire cutting electrical discharge machining apparatus comprising:
a means for applying a forward pulse voltage and a reverse voltage in turn between a wire electrode and a work, while said wire electrode is being moved toward said work along a desired path,
wherein said apparatus further comprising:
a means for moving said wire electrode toward said work, while a feeble voltage is applied between said wire electrode and said work, prior to commencement of electrical discharge machining,
a means for detecting contact of said wire electrode with said work and for moving said wire electrode backward to remove said wire electrode from said work, in response to the contact of said wire electrode with said work,
a means for detecting disunion of said wire electrode from said work and for commencing electrical discharge machining, in response to the disunion of the wire electrode from the work, and
a means for detecting interruption of electrical discharge machining current for a predetermined period and for terminating electrical discharge machining, in response to the termination of flowing the electrical discharge machining current.

2. A method of wire cutting electrical discharge machining comprising:
a step for applying a forward pulse voltage and a reverse voltage in turn between a wire electrode and a work, while moving said wire electrode toward said work, along a desired path,
wherein said method further comprising:
a step for moving said wire electrode toward said work, while applying a feeble voltage between said wire electrode and said work, prior to commencement of electrical discharge machining,
a step for detecting contact of said wire electrode with said work by discovering a decrease in voltage between said wire electrode and said work and for moving said wire electrode backward to remove said wire electrode from said work, in response to the contact of said wire electrode with said work,
a step for detecting disunion of said wire electrode from said work by discovering an increase in voltage between said wire electrode and said work and for commencing electrical discharge machining, in response to the disunion of said wire electrode from said work, and
a step for detecting interruption of electrical discharge machining current for a predetermined period and for terminating electrical discharge machining, in response to the termination of flowing the electrical discharge machining current.
